# EUROPÄISCHE PATENTSCHRIFT

(11) **EP 0 671 573 B1**
(45) Veröffentlichungstag und Bekanntmachung des Hinweises auf die Patenterteilung: **07.05.1997**
(21) Anmeldenummer: 95101809.2
(22) Anmeldetag: 10.02.1995
(51) Int. Cl.: F16H 7/06

(54) **Gelenkkette (Rollenkette) mit Antrieb**
Link chain with drive mechanism
Chaîne articulée avec dispositif d'entraînement

(30) Priorität: 08.03.1994 DE 4407592
(43) Veröffentlichungstag der Anmeldung: 13.09.1995
(73) Patentinhaber: ERICH WULF UND SOHN GmbH & Co. KG, D-59889 Eslohe-Kückelheim (DE)
(72) Erfinder: Wilke, Hermann Dipl.-Ing., D-59889 Eslohe-Kückelheim (DE)
(74) Vertreter: Fritz, Edmund Lothar, Dipl.-Chem.

(56) Entgegenhaltungen:
- EP-A- 0 554 551
- FR-A- 1 297 285
- GB-A- 437 238
- US-A- 2 718 153
- US-A- 2 797 586

## Beschreibung

Die Erfindung bezieht sich auf eine Rollenkette mit Antrieb mit den Merkmalen nach dem Oberbegriff des Anspruchs 1. Rollenketten, wie allgemein bekannt, haben auf Bolzen gelagerte Rollen, geeignet zur Aufnahme zwischen den Zähnen von Kettenrädern. Die Bolzen können dabei von Hülsen umgeben sein. Die Bolzen sind an jeder Seite gelenkig durch zwei Laschen verbunden. Nach dem Stand der Technik erfolgt der Antrieb von Rollenketten durch Kettenräder während des Umlaufs während mehrere Rollen im Eingriff stehen. Die Merkmale des dieser Oberbegriffs sind aus FR-A-1 297 285 bekannt.

Der Erfindung liegt die Aufgabe zugrunde den Antrieb einer herkömmlichen Rollenkette so auszubilden, daß sich gegenüber dem Stand der Technik ein geringerer Kettenverschleiß ergibt.

Diese Aufgabe wird durch die Merkmale des Anspruchs 1 gelöst. Die Unteransprüche haben bevorzugte Ausführungen dieser Lösung zum Inhalt.

Bekannt ist (US-A 2797586) eine Gelenkkette, bei der Laschen gelenkig über Stege verbunden sind. Ein Teil dieser Stege weist beidendig äußere Rollen auf, die während des Eingriffs an beidseitigen Schienen gerade geführt sind. Bekannt ist weiterhin (US-A 2718153) eine Gelenkkette, bei der Laschen, die mit Zähnen mit Kettenrädern in Eingriff stehen, einseitig beim Umlauf durch kreisbogenförmig gekrümmte Schienen mit Rollen geführt sind.

Anregungen zur Lösung der vorgenannten, speziell bei einer Rollenkette auftretenden Probleme können von diesem Stand der Technik nicht ausgehen.

Der Erfindung liegt die Erkenntnis zugrunde, daß die Funktionsfähigkeit einer Rollenkette insbesondere vom Verschleiß zwischen Rolle, Buchse und Bolzen abhängt wie es sich beim Einwinkeln zweier benachbarter Glieder beim Einlaufen der Kette in das Kettenrad ergibt. Ein solches Einwinkeln der Glieder unter Belastung wird durch diese Erfindung vermieden, weil dabei während des Kettenradeingriffes die Kettenrolle und damit auch der Kettenbolzen und die Kettenbuchse nur linear und statisch belastet werden.

Kraftkomponenten, die von der linearen Richtung abweichen, werden nämlich dabei vom Führungselement aufgenommen, so daß die Kettenbolzen davon frei bleiben.

Als Führungselemente können zwei Rollenbahnen vorgesehen sein, zwischen denen die Kettenlaschen an der betreffenden Seite geführt und abgestützt sind. Die Führungen und Abstützungen der Laschen können aber auch durch die Führungsleisten erfolgen, die vorzugsweise aus einem zweckentsprechenden Kunststoff hergestellt werden. Bei diesen Ausführungen können herkömmliche Gelenkketten eingesetzt werden.

Es hat sich gezeigt, daß ein Linearantrieb nach der Erfindung auch wesentlich weniger Geräusche entwickelt als ein Antrieb mit umlaufender Kette, wo die vorgeschriebene Geräuschdämpfung nur durch eine relativ hohe Zähnezahl des Kettenrades erreicht werden kann. Bei einem Linearantrieb nach der Erfindung braucht die Zähnezahl beim Kettenrad nicht so hoch zu sein, dementsprechend kann man Kettenräder mit geringerem Durchmesser vorsehen und demzufolge die Einbauhöhe des Antriebs verringern.

Im folgenden werden Ausführungsbeispiele der Erfindung beschrieben unter Bezugnahme auf die beiliegenden Zeichnungen.
- Fig. 1: ist eine Ansicht eines Führungselementes bei einem Antrieb nach der Erfindung, wobei die Elemente der Gelenkkette und des Kettenrades gestrichelt dargestellt sind
- Fig. 2: stellt in vergrößertem Maßstab einen Querschnitt durch das Führungselement nach II-II von Fig. 1 dar sowie einen Schnitt durch die Gelenkkette
- Fig. 3: zeigt eine Ansicht eines Führungselementes des Antriebs in einer weiteren Ausführungsform
- Fig. 4: ist ein Schnitt nach IV-IV von Fig. 3 (in etwas vergrößertem Maßstab)
- Fig. 5: zeigt einen Querschnitt durch eine weitere Ausführungsform einer Führungseinrichtung mit der dazugehörigen Gelenkkette

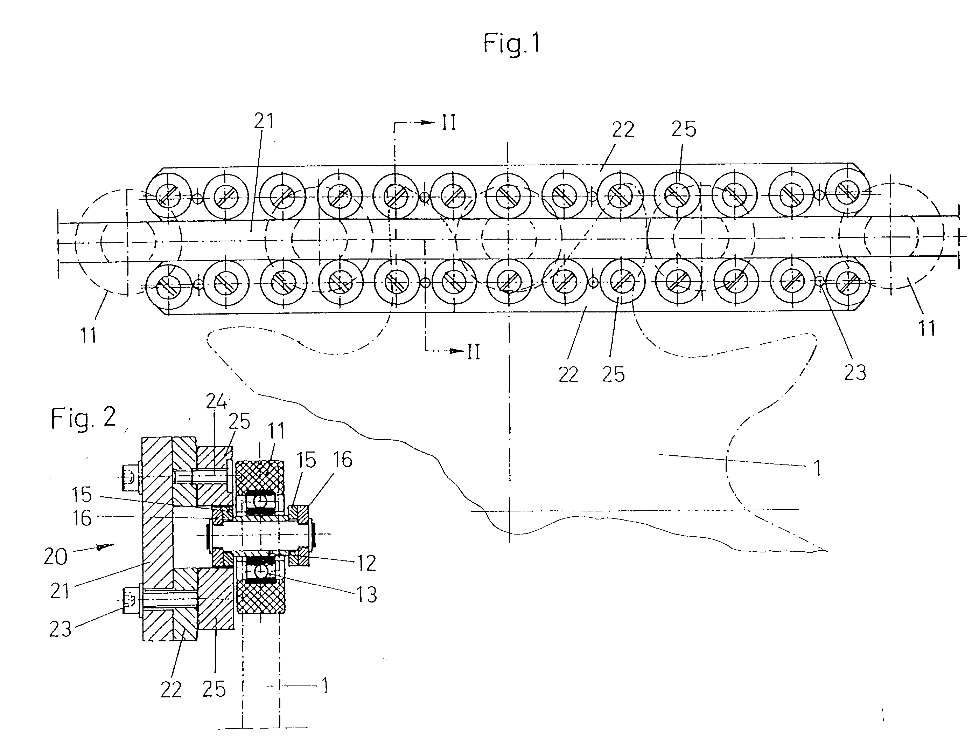

Zunächst wird auf Fig. 1 und 2 Bezug genommen.

Die auf Fig. 1 und 2 gezeigte Gelenkkette mit Kettenrolle 11 Kettenhülse 12, Bolzen 14 sowie mit den beiden inneren Laschen 15 und den beiden äußeren Laschen 16 ist eine herkömmliche Ausführung. Die Kettenrolle 11 ist auf der Kettenhülse 12 mit Kugellager 13 gelagert.

Bei einem Führungselement 20 ist eine breite Leiste 21 in der Kettenrichtung neben dem Kettenrad 1 im Bereich des Eingriffs der Kettenrollen gehalten. An der breiten Leiste 21 sind zwei schmale Leisten 22 gehalten mittels Verbindungsbolzen 23. An jeder schmalen Leiste sind eine Mehrzahl von Führungsrollen 25 drehbar mit Achsbolzen 24 gelagert. Dabei ist die Anordnung so getroffen, daß, während die Kettenrollen 11 von den Zähnen des Kettenrades 1 erfaßt werden, die jeweiligen Kettenlaschen 15/16 an der betreffenden Seite durch die beiden Reihen der Führungsrollen 25 geführt und gestützt sind. Von den Zähnen des Kettenrades werden nur lineare Kräfte auf die Kettenrollen 11 übertragen. Kraftkomponenten, die von der linearen Richtung abweichen, werden von den Führungsrollen 25 aufgenommen. Durch die nur lineare Belastung der Kettenrollen und somit auch der Bolzen 14 bleibt der Verschleiß der Kette gering.

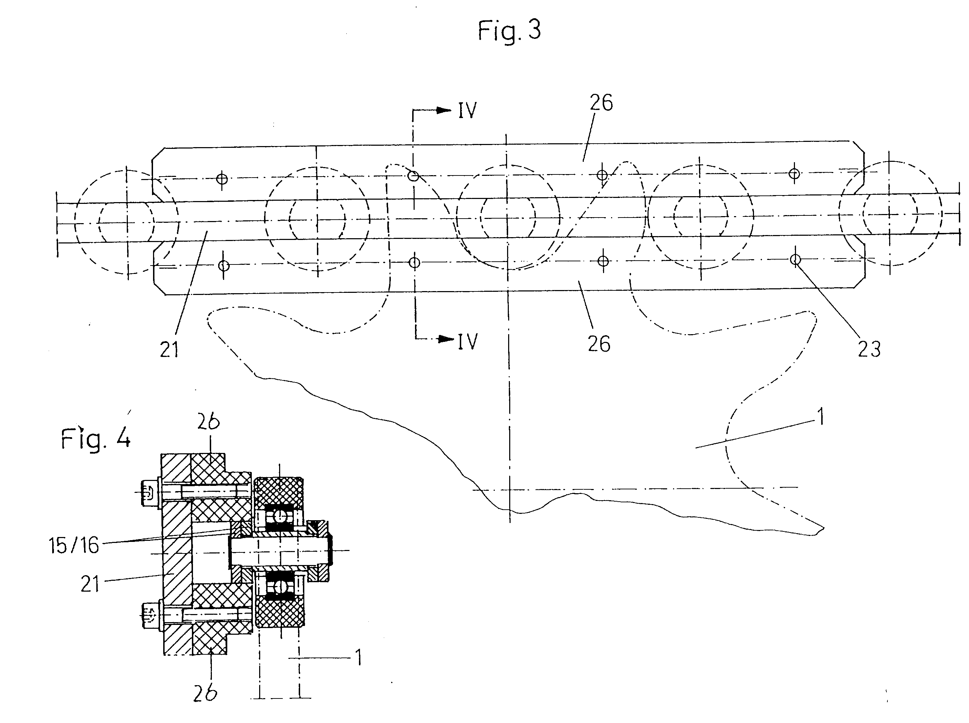

Bei der Ausführungsform nach Fig. 3 und 4 sind auf einer breiten Leiste 21 zur Führung und Abstützung der Kettenlaschen 15/16 Führungsleisten 26 vorgesehen, die vorzugsweise aus einem zweckentsprechenden Kunststoff hergestellt sind.

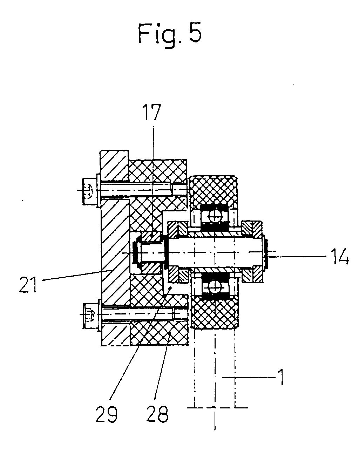

Bei der Ausführungsform nach Fig. 5 ist eine Gelenkkette in Spezialausführung vorgesehen, bei der an einer Seite am Bolzen 14 jeweils zusätzlich eine kleine Kettenführungsrolle 17 gelagert ist. Zur Führung der Kettenführungsrollen sind beim Führungselement an einer breiten Leiste 21 zwei Führungsleisten 28 angebracht. Im Zwischenraum zwischen diesen beiden Führungsleisten werden die kleinen Führungsrollen 17 geführt und abgestützt. Zur Aufnahme der Kettenlaschen 15/16 sind in den Führungsleisten 28 Ausnehmungen 29 gebildet.

## Patentansprüche

1. Rollenkette mit Antrieb, bestehend aus einem angetriebenen Kettenrad (1), wobei die Rollenkette auf Bolzen (14) drehbar gelagerte Rollen (11) aufweist, die durch seitliche Laschen (15,16) gelenkig verbunden sind und mit dem Kettenrad (12) in Eingriff stehen, dadurch gekennzeichnet, daß neben dem Kettenrad (1) im Bereich der Zähne desselben in Bewegungsrichtung der Kette eine Leiste (21) gehalten ist mit zwei Rollenbahnen (25), zwischen denen die Laschen (15,16) der Kette an der betreffenden Seite während des Eingriffs der Rollen linear geführt und gestützt sind, so daß von den Zähnen des Kettenrades (1) nur lineare Kräfte auf die Kettenrollen (11) übertragen werden.

2. Rollenkette mit Antrieb nach Anspruch 1, dadurch gekennzeichnet, daß die Führungsrollen (25) auf schmalen Leisten (22) gelagert sind, wobei die schmalen Leisten mit Verbindungsbolzen (23) an der breiten Leiste (21) gehalten sind.

3. Rollenkette mit Antrieb nach dem Oberbegriff des Anspruchs 1, dadurch gekennzeichnet, daß neben dem Kettenrad (1) im Bereich der Zähne desselben eine Leiste (21) in Bewegungsrichtung gehalten ist mit zwei Führungsleisten (27), zwischen denen die Laschen (15/16) der Ketten während des Eingriffs der Rollen linear geführt und gestützt sind, so daß von den Zähnen des Kettenrades (1) nur lineare Kräfte auf die Kettenrollen (11) übertragen werden.

4. Rollenkette mit Antrieb nach Anspruch 3, dadurch gekennzeichnet, daß die Führungsleisten (26) aus Kunststoff bestehen.

## Claims

1. Link chain with drive mechanism consisting of a driven chain wheel (1), the link chain comprising rollers (11) pivotally mounted on bolts (14) which are hinged by means of lateral shackles and are in engagement with the chain wheel (12), characterised in that a adjacent to the chain wheel (1) in the region of the teeth of the latter in the moving direction of the chain there is mounted a strip (21) with two paths of rollers (25) between which the shackles (15, 16) of the chain are linearly guided and supported at the respective side during the engagement of the rollers so that only linear forces are transmitted by the teeth of the chain wheel (1) onto the chain rollers (11).

2. Link chain with drive mechanism as claimed in claim 1, characterised in that the guide rollers (25) are supported on small strips (22), the small strips being held by means of connecting bolts (23) at the wide strip (21).

3. Link chain with drive mechanism according to the introductory part of claim 1, characterised in that adjacent to the chain wheel (1) in the region of the teeth of the latter a strip (21) is held in the moving direction, said strip comprising two guide strips (26) between which the shackles (15/16) of the chains are linearly guided and supported during the engagement of the rollers so that only linear forces are transmitted by the teeth of the chain wheel (1) onto the chain rollers (11).

4. Link chain with drive mechanism as claimed in claim 3, characterised in that the guide strips (26) consist of a plastics material.

## Revendications

1. Chaîne articulée avec dispositif d'entraînement, composée d'une roue à chaîne entraînée (1), la chaîne articulée présentant des rouleaux (11) montés à rotation sur des tourillons (14), rouleaux qui sont reliés à articulation au moyen d'éclisses (15, 16) et qui sont en engagement avec la roue à chaîne, caractérisée en ce qu'à côté de la roue à chaîne (1), dans la région des dents de celle-ci, il est prévu, dans la direction de déplacement de la chaîne, une languette (21) avec deux chemins de roulement (25), entre lesquels les éclisses (15, 16) de la chaîne sont, du côté intéressé, guidées et étayées de manière linéaire pendant l'engagement des rouleaux, de sorte qu'à partir des dents de la roue à chaîne (1), seules des forces linéaires sont transmises sur les rouleaux (11) de la chaîne.

2. Chaîne articulée avec dispositif d'entraînement suivant la revendication 1, caractérisée en ce que les rouleaux de guidage (25) sont montés sur des languettes étroites (22), les languettes étroites étant à l'aide de rivets de liaison (23) maintenues sur la languette large (21).

3. Chaîne articulée avec dispositif d'entraînement suivant la préambule de la revendication 1, caractérisée en ce qu'à côté de la roue à chaîne (1), dans la région des dents de celle-ci, il est prévu, dans la direction de déplacement de la chaîne, une languette (21) avec deux languettes de guidage (26), entre lesquelles les éclisses (15, 16) des chaînes sont, pendant l'engagement des rouleaux, guidées et étayées linéairement, de sorte qu'à partir des dents de la roue à chaîne (1), seules des forces linéaires sont transmises sur les rouleaux (11) de la chaîne.

4. Chaîne articulée suivant la revendication 3, caractérisée en ce que les languettes de guidage (26) sont en matière plastique.
